# EUROPÄISCHE PATENTSCHRIFT

(11) **EP 1 419 687 B1**
(45) Veröffentlichungstag und Bekanntmachung des Hinweises auf die Patenterteilung: **04.10.2006**
(21) Anmeldenummer: 03024225.9
(22) Anmeldetag: 22.10.2003
(51) Int. Cl.: A01D 41/127

(54) **Verfahren zur Steuerung der Fahrgeschwindigkeit einer Erntemaschine**
Method for controlling the speed of a harvester
Procédé pour contrôler la vitesse d'une machine de récolte

(30) Priorität: 13.11.2002 DE 10253081
(43) Veröffentlichungstag der Anmeldung: 19.05.2004
(73) Patentinhaber: CLAAS Selbstfahrende Erntemaschinen GmbH, 33428 Harsewinkel (DE)
(72) Erfinder: Quincke, Gunnar, 59494 Soest (DE); Buhne, Hubert, 48324 Sendenhorst (DE)

(56) Entgegenhaltungen:
- EP-A- 1 051 898
- AU-A- 2 613 902
- US-A- 6 036 597

## Beschreibung

Die Erfindung betrifft ein Verfahren zur Steuerung der Fahrgeschwindigkeit einer selbstfahrenden landwirtschaftlichen Erntemaschine, mit wenigstens einem Hauptaggregat und wenigstens einem Nebenaggregat, wobei die Fahrgeschwindigkeit in Abhängigkeit von wenigstens einem Parameter des Erntegutes gesteuert wird.

Ein solches Verfahren ist z.B. aus AU-A-26139 bekannt.

Aus der EP 1 051 898 A2 ist beispielsweise eine Einrichtung zum Regeln der Vortriebsgeschwindigkeit einer Erntemaschine, insbesondere eines selbstfahrenden Feldhäckslers, bekannt, die in Abhängigkeit von der von einer Erntegutaufnahmeeinrichtung aufgenommenen Rate und/oder Menge an Erntegut, die Vortriebsgeschwindigkeit der Erntemaschine unter Verwendung eines nichtlinearen Reglers automatisch regelt. Ziel dieser Regeleinrichtung ist eine gleichmäßige Belastung der Erntemaschine mit Erntegut unter gleichzeitiger Vermeidung von, durch kurzzeitige Durchsatzschwankungen verursachte, sprunghafte Änderungen der Vortriebsgeschwindigkeit. Dieses Konzept lässt jedoch völlig außer Acht, dass die von der Erntemaschine verarbeitbare Erntegutmenge nicht konstant ist. Die verfügbare Motorleistung verzweigt sich auch in die vom Antriebsmotor angetriebenen Nebenaggregate. Insbesondere variiert die in dem Nebenaggregat der Erntemaschine zur Vorfahrt der Erntemaschine benötigte Fahrantriebsleistung stark in Abhängigkeit von den Boden- und Geländebedingungen am jeweiligen Einsatzort der Erntemaschine. Durch beispielsweise eine Bergauffahrt der Erntemaschine, erhöht sich auch der auf den Fahrantrieb entfallende Motorleistungsanteil, so dass die für die Erntegutbearbeitung geforderte Motorleistung nicht mehr zur Verfügung steht und es kann nachteilig zu einer derart starken Motordrückung kommen, dass der Motor abgewürgt oder der automatische Vorfahrtbetrieb unterbrochen werden muss. Dieses Problem kann nur dadurch vermieden werden, dass die verfügbare Leistungsreserve des Motors immer größer als der eventuell maximal in den Nebenaggregaten anfallende Leistungsbedarf gewählt wird. Beim Betrieb der Erntemaschine in ebenem Gelände oder bei Talfahrt wird dann nachteilig die verfügbare Motorleistung nicht ausreichend genutzt und die Erntemaschine nicht am optimalen Betriebspunkt betrieben.

Es ist daher Aufgabe der vorliegenden Erfindung, die beschriebenen Mängel einer automatischen Steuerung der Fahrgeschwindigkeit an einer Erntemaschine zu beheben.

Diese Aufgabe wird durch ein Verfahren mit den Merkmalen des Anspruchs 1 gelöst.
Hierdurch ist es nunmehr möglich, eine an die momentane Ernte- beziehungsweise Einsatzbedingung angepasste optimale Fahrgeschwindigkeit der Erntemaschine, zur Erzielung eines optimalen Erntegutdurchsatzes, einstellen zu können. Dieses Optimum wird erreicht, indem die im Arbeitsbetrieb der Erntemaschine wechselnden Erntegutparameter und die wechselnden Einsatzbedingungen der Erntemaschine vorteilhaft anhand des wenigstens einen Parameters des Haupt- und/oder Nebenaggregates erkannt und bei der Steuerung der Fahrgeschwindigkeit berücksichtig werden.

In einer ersten Ausgestaltung der Erfindung, ist der wenigstens eine Parameter des Hauptaggregates und/oder des Nebenaggregates ein Parameter, der im Wesentlichen unabhängig von wenigstens einem Parameter des Erntegutes ist. Einflüsse die weitgehend unabhängig von dem Erntegut auf die Erntemaschine und deren Funktion einwirken und insbesondere die Fahrgeschwindigkeit der Erntemaschine beeinflussen, können hierdurch erkannt und durch deren Berücksichtigung vorteilhaft eine zuverlässige Steuerung der Fahrgeschwindigkeit sichergestellt werden.

In einer Weiterbildung der Erfindung ist das wenigstens eine Nebenaggregat der Fahrantrieb der Erntemaschine und der wenigstens eine Parameter zumindest ein Parameter des Fahrantriebs. Die Funktion und Belastung des Fahrantriebs in einer Erntemaschine ist im Wesentlichen unabhängig von den Parametern des geernteten Gutes.

Anhand des wenigstens eines Parameters des Fahrantriebs, können die von außen auf die Steuerung der Fahrgeschwindigkeit einwirkenden Einflüsse, wie Fahrwiderstand oder Steigung oder Gefälle, vorteilhaft ermittelt und bei der Steuerung Fahrgeschwindigkeit der Erntemaschine entsprechend berücksichtigt werden. Die Einhaltung einer gewünschten optimalen Fahrgeschwindigkeit kann hierdurch verbessert und der hiervon abhängige optimale Erntegutdurchsatz sichergestellt werden.

In einer weiteren Ausgestaltung der Erfindung ist der wenigstens eine Parameter des Fahrantriebs der Erntemaschine, die Fahrantriebsleistung. Die Berücksichtigung der Fahrantriebsleistung, ermöglicht eine Aussage über die Höhe der durch den Nebenaggregat verursachten Belastung der Erntemaschine. Weiterhin kann anhand der Fahrantriebsleistung unter Berücksichtigung der Fahrgeschwindigkeit vorteilhaft eine Änderung der Fahrbedingungen abgeleitet werden.

In einer weiteren Ausgestaltung der Erfindung erfolgt eine Änderung der Fahrgeschwindigkeit der Erntemaschine unter Berücksichtigung der Leistungsreserve des Fahrantriebs. Die aktuelle Antriebsleistung des Fahrantriebs kann mit dessen bekannter maximalen Antriebsleistung verglichen und hieraus die Leistungsreserve ermittelt werden. Bei der Steuerung der Fahrgeschwindigkeit ermöglicht dies vorteilhaft, dass die Fahrgeschwindigkeit nur innerhalb des zulässigen Leistungsbereichs des Fahrantriebs geändert wird, sodass eine Überlastung des Fahrantriebs ausgeschlossen werden kann.

In einer Weiterbildung der Erfindung ist der Fahrantrieb der Erntemaschine ein hydrostatischer Fahrantrieb und der wenigstens eine Parameter des Fahrantriebs der Druck im hydrostatischen Fahrantrieb. Es hat sich als besonders vorteilhaft erwiesen, an hydrostatischen Fahrantrieben diesen Druckparameter bei der Steuerung der Fahrgeschwindigkeit zu berücksichtigen. Der Druck ist durch einfache Messmittel erfassbar und wird vielfach schon von den heutigen Fahrantriebssystemen bereitgestellt. Anhand dieses Druckes und unter Berücksichtigung der Drehzahl des antreibenden Hydraulikmotors, ist die aktuelle Belastung des Fahrantriebs ermittelbar. Ferner kann aus diesem Druckparameter ein Schubbetrieb des Fahrantriebes bei Bergabfahrt oder ein Zugbetrieb des Fahrantriebs bei Bergauffahrt erkannt und entsprechend bei der Steuerung der Fahrgeschwindigkeit, insbesondere bei einer Änderung der Fahrgeschwindigkeit berücksichtigt werden.

In einer weiteren Ausgestaltung der Erfindung, wird das wenigstens eine Hauptaggregat und/oder das wenigstens eine Nebenaggregat von einem in der Erntemaschine vorhandenen Antriebsmotor angetrieben und bei der Steuerung der Fahrgeschwindigkeit wenigstens ein Parameter des Antriebsmotors berücksichtig. Der Antriebsmotor treibt das wenigstens eine Haupt- beziehungsweise wenigstens eine Nebenaggregat an, wobei bekanntlich die insgesamt verfügbare Antriebsleistung begrenzt ist. Die Berücksichtigung wenigstens eines Parameters des Antriebsmotors ermöglich vorteilhaft eine Steuerung der Fahrgeschwindigkeit der Erntemaschine so, dass Grenzwerte wenigstens eines Parameters des Antriebsmotors eingehalten werden können.

Insbesondere hat es sich als vorteilhaft erwiesen, als ein Parameter des Antriebsmotors, das abgegebene Drehmoment zu berücksichtigen. Die elektronischen Motorsteuergeräte stellen das vom Antriebsmotor abgegebene Drehmoment als Parameter des Antriebsmotors zur Verfügung, wodurch in Verbindung mit der Drehzahl des Antriebsmotorabtriebs die Antriebsleistung des Antriebsmotors ermittelt werden kann. Aus der abgegebenen Antriebsleistung kann dann in Verbindung mit der im Fahrantrieb erfassten Antriebsleistung und eventuell den in weiteren Nebenaggregaten ermittelten Antriebsleistungen, die momentan von einem Hauptaggregat aufgenommene Antriebsleistung indirekt ermittelt werden. Ferner kann in vorteilhafter Weise auch eine Änderung des Drehmoments am Motorabtrieb, dem Verursacher wie Haupt- oder Nebenaggregat zugeordnet werden und dies insbesondere dann, wenn sich gleichzeitig mehrerer berücksichtigte Parameter ändern. Die Steuerung der Fahrgeschwindigkeit kann dann vorteilhaft so erfolgen, dass ein optimales Drehmoment am Antriebsmotors bei gleichzeitiger Erzielung einer optimalen Erntegutverarbeitung eingehalten wird.

In einer Weiterbildung der Erfindung erfolgt eine Änderung der Fahrgeschwindigkeit der Erntemaschine unter Berücksichtigung der Drehmomentreserve des Antriebsmotors. Insbesondere in Verbindung mit dem maximalen Motordrehmoment lässt sich eine Aussage über die verfügbare Leistungsreserve des Antriebsmotors ableiten. Diese Leistungsreserve kann als weiterer Parameter bei der Steuerung der Fahrgeschwindigkeit berücksichtigt werden. Wird von dem Parameter des Erntegutes eine höhere Fahrgeschwindigkeit vorgegeben, so wird diese geforderte Erhöhung vorteilhaft nur soweit zugelassen, dass die Unterschreitung einer vorgegeben Leistungsreserve nicht erfolgt, beziehungsweise die vorhandene Leistungsreserve nur ausgeschöpft wird. Eine Überlastung des Antriebsmotors wird vorteilhaft verhindert, wobei eine optimale Motorauslastung bei maximal möglichem Erntegutdurchsatz gegeben ist.

In einer weiteren Ausgestaltung der Erfindung wird ein verarbeitbarer Erntegutdurchsatz aus der maximal verfügbaren Antriebsleistung des Antriebsmotors, unter Berücksichtigung wenigstens einer Antriebsleistung eines Nebenaggregates bestimmt und der verarbeitbare Erntegutdurchsatz bei der Steuerung der Fahrgeschwindigkeit der Erntemaschine berücksichtigt. Ziel der Steuerung der Fahrgeschwindigkeit der Erntemaschine ist die Verarbeitung einer maximal möglichen Erntegutmenge innerhalb kürzester Zeit. Der sogenannte Erntegutdurchsatz der Erntemaschine wird durch die verfügbare Antriebsmotorleistung begrenzt. Vorteilhaft kann der bestimmte verarbeitbare Erntegutdurchsatz mit dem momentanen Erntegutdurchsatz verglichen und anhand einer Abweichung, eine entsprechende Korrektur der Fahrgeschwindigkeit vorgenommen werden. Hierdurch entsteht der Vorteil, das mittels einer geeigneten Fahrgeschwindigkeit, der optimale Arbeitsbereich des Antriebsmotors eingestellt und gleichzeitig ein optimaler Erntegutdurchsatz erzielt werden kann. Weiterhin kann vorteilhaft vorausschauend abgeschätzt werden, ob die momentan in die Erntemaschine einlaufende Erntegutmenge, auch von dieser verarbeitet werden kann oder ob durch eine Änderung der Fahrgeschwindigkeit eine Anpassung erfolgen muss. Insbesondere wird bei einer sich ändernden Antriebsleistung, in beispielsweise dem Fahrantrieb, der verarbeitbare Erntegutdurchsatz entsprechend angepasst. Eine Steuerung der Fahrgeschwindigkeit kann daher auch bei einer sich ändernden Einsatzbedingungen der Erntemaschine zuverlässig automatisch durchgeführt werden.

In einer weiteren Ausgestaltung der Erfindung wird wenigstens eine Abhängigkeit zwischen wenigstens einem Parameter des Antriebsmotors und wenigstens einem Parameter des Nebenaggregates ermittelt und bei der Steuerung der Fahrgeschwindigkeit der Erntemaschine berücksichtigt. Aus der ermittelten Abhängigkeit, kann eine vorausschauende Beurteilung der sich einstellenden Änderung des Parameter des Antriebsmotors bei einem veränderten Parameter im Nebenaggregat erfolgen. Ferner ist es vorteilhaft möglich, Änderungen der Arbeits- und/oder Erntebedingungen der Erntemaschine anhand einer Änderung der ermittelten Abhängigkeit erkennen und bei der Steuerung der Fahrgeschwindigkeit entsprechend berücksichtigen zu können.

In einer Ausgestaltung der Erfindung wird die wenigstens eine Abhängigkeit zwischen wenigstens einem Parameter des Antriebsmotors und wenigstens einem Parameter des Hauptaggregates ermittelt und bei der Steuerung der Fahrgeschwindigkeit der Erntemaschine berücksichtigt. Aus dieser Abhängigkeit, kann beispielsweise die Abhängigkeit der Antriebsmotorleistung und beispielsweise des Erntegutdurchsatzes anhand der Drehzahl der Häckseltrommel bestimmt und überwacht werden. Vorausschauend ist es nunmehr möglich, die Änderung einer Antriebsmotorleistung aufgrund einer Änderung der Drehzahl der Häckseltrommel bestimmen zu können. Es ist hierdurch vorausschauend möglich, die abgegebene Antriebsleistung des Antriebsmotors innerhalb des optimalen Arbeitsbereichs, durch eine entsprechende Steuerung der Fahrgeschwindigkeit der Erntemaschine, zu halten.

In einer Ausgestaltung der Erfindung wird wenigstens eine Abhängigkeit zwischen wenigstens einem Parameter des Erntegutes und der Fahrgeschwindigkeit der Erntemaschine ermittelt und bei der Steuerung der Fahrgeschwindigkeit der Erntemaschine berücksichtigt. Hierdurch ist es möglich, die Änderung des Erntegutdurchsatzes in Abhängigkeit von der Fahrgeschwindigkeit zu ermitteln und bei der Steuerung der Fahrgeschwindigkeit berücksichtigen zu können. Anhand der bekannten Abhängigkeit, kann vorausschauend abgeschätzt werden, wie sich eine Änderung der Fahrgeschwindigkeit auf den Erntegutdurchsatz auswirkt beziehungsweise welche Fahrgeschwindigkeit für den optimalen Erntegutdurchsatz erforderlich ist. Die Steuerung der Fahrgeschwindigkeit kann somit am gewünschten Erntegutdurchsatz geführt werden. Übersteuerungen der Fahrgeschwindigkeit können vorteilhaft vermieden werden und eine stabile Steuerung der Fahrgeschwindigkeit der Erntemaschine durchgeführt werden.

Anhand von Ausführungsbeispielen soll die Erfindung nachfolgend näher erläutert werden. Dabei zeigt:
- Figur 1 eine Seitenansicht eines nach dem erfindungsgemäßen Verfahren arbeitenden selbstfahrenden Feldhäcksler 1 und
- Figur 2 eine Seitenansicht eines selbstfahrenden Mähdreschers 46.

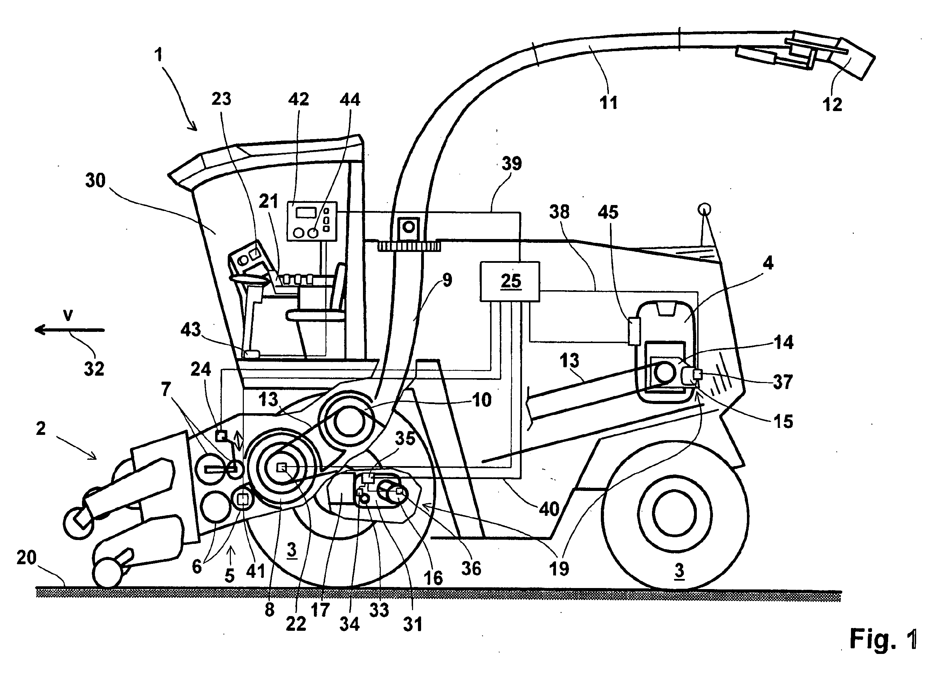

In der Figur 1 wird eine Seitenansicht eines nach dem erfindungsgemäßen Verfahren arbeitenden selbstfahrenden Feldhäcksler 1 dargestellt. Der Feldhäcksler 1 ist mit einem Hauptaggregat, der Häckseltrommel 8 und mit wenigstens einem Nebenaggregat, beispielsweise dem Fahrantrieb 19 ausgestattet. Ferner besitzt der Feldhäcksler 1 Räder 3, ein Vorsatzgerät 2 und einen Antriebsmotor 4.
Mittels des Vorsatzgerätes 2 erntet der Feldhäcksler 1 Erntegut, beispielsweise Gras von einem Feldstück ab. Innerhalb des als Pick-Up ausgeführten Vorsatzgerätes 2 wird das vom Boden 20 aufgenommene Erntegut auf die Breite des Einzugsorgans 5 zusammen geführt und dann an das Einzugsorgan 5 übergeben. Das Erntegut wird dann zwischen den im Einzugsorgan 5 angeordneten Einzugswalzen 6;7 verdichtet und an die nachgeordnete Messertrommel 8 weiter transportiert. Diese rotierende Messertrommel 8 häckselt das Erntegut in eine vorgegebene Länge und gibt es dann rückwärtig an ein Austragschacht 9 ab. Innerhalb des Austragschacht 9 greift ein Nachbeschleuniger 10 in den Erntegutstrom ein und beschleunigt diesen entlang des Auswurfkrümmers 11 zur sicheren Überladung an einen Transportbehälter. An der Abgabeseite des Auswurfkrümmers 11, ist eine Auswurfklappe 12 zur Bestimmung der Abgaberichtung des Erntegutes angebracht.
Der Antriebsmotor 4 des Feldhäckslers 1 treibt über einen gemeinsamen Antriebsriemen 13, die Messertrommel 8, den Nachbeschleuniger 10, das Einzugsorgan 5 und das Vorsatzgerät 2 an. Das von dem Feldhäcksler 1 verarbeitete Erntegut bestimmt zum einen durch seine Art, Struktur und Feuchte und zum anderen durch den momentanen Erntegutdurchsatz durch den Feldhäcksler 1, die überwiegende Belastung der Aggregate 2,5,8,10 und damit die über den Antriebsriemen 13 abgegebene Leistung des Antriebsmotors 4. Der Erntegutdurchsatz wird durch die Fahrgeschwindigkeit v des Feldhäckslers 1 und die aufgenommenen Erntegutmenge vorgegeben, wobei diese in Abhängigkeit von dem Erntegutertrag auf dem momentan abgeernteten Feldstück variiert.
Der Fahrantrieb 19 und eventuell weitere Nebenaggregate werden über das Nebengetriebe 14 von dem Antriebsmotor 4 angetrieben. Die von dem Fahrantrieb 19 verbrauchte und von dem Antriebsmotor 4 bereitgestellte Antriebsleistung, wird im Wesentlichen von der Fahrgeschwindigkeit v und den Fahrbedingungen des Feldhäcksler 1 im Gelände bestimmt. Der von dem Erntegut abhängige, auf die Fahrantriebsleistung einwirkende Anteil ist hierbei vernachlässigbar gering.
Erfindungsgemäß wird die Fahrgeschwindigkeit v des Feldhäckslers 1 in Abhängigkeit wenigstens eines Parameters des Erntegutes durch eine Steuereinrichtung 25 automatisch gesteuert. Der hierfür ausschlaggebende Parameter des Erntegutes kann ein einzelner Parameter des Erntegutes, wie beispielsweise die Gutfeuchte oder Gutdichte sein und soll im Rahmen der Erfindung auch als ein von dem Erntegut abhängiger Parameter, wie zum Beispiel die Erntegutmenge oder der Erntegutdurchsatz verstanden werden. Der Parameter des Erntegutes wird als einzelner Parameter oder in Kombination mit weiteren Parametern, als der wenigstens eine Parameter des Erntegutes, bei der Steuerung der Fahrgeschwindigkeit v des Feldhäckslers 1 berücksichtigt. Im gezeigten Feldhäcksler 1 wird der Parameter des Erntegutes durch die Sensorik 24 erfasst. Diese bestimmt anhand der Auslenkung der oberen Einzugswalzen 7 gegenüber den unteren fest gelagerten Einzugswalzen 6 die von dem Feldhäcksler 1 vom Boden 20 aufgenommene Erntegutmenge und leitete diesen Abstandswert der Steuereinrichtung 25 zu. Es liegt im Rahmen der Erfindung, die hier genannte Erfassung eines Parameters des Erntegutes, durch weiter bekannte Einrichtungen zu ersetzen oder durch diese zu erweitern. Es kommt lediglich darauf an, dass der wenigstens eine Parameter des Erntegutes aus dem zur Verarbeitung anstehenden Erntegut, vor der Verarbeitung durch wenigstens eine Sensorik 24 erfasst wird. Es sind hierfür beispielsweise berührungslos arbeitende Laserabtasteinrichtungen mit beweglichen Abtaststrahlen bekannt, die die Kontur eines Grasschwades abtasten und aus dieser Kontur eine Querschnittsfläche des Schwades als Parameter des Erntegutes bereitstellen.
Zur Ermittlung des Erntegutdurchsatzes wird in dem Feldhäcksler 1 an wenigstens einer Stelle die Durchlaufgeschwindigkeit des Ernteguts ermittelt. Hierzu wird mittels eines Sensors 41, die Drehzahl einer unteren Einzugswalze 6 gemessen. Die Drehzahl der Einzugswalze 6 wird in der Steuereinrichtung 25 mit der Auslenkung der oberen Einzugswalze 7 und in Verbindung mit der bekannten Breite des Einzugsorgan 5 zu dem Erntegutdurchsatz verrechnet. Es liegt im Rahmen der Erfindung auch weitere Parameter, wie beispielsweise die Erntegutart, die Erntegutfeuchte und/oder die Erntegutstruktur, bei der Ermittlung des Erntegutdurchsatzes zu berücksichtigen.

Ziel der Steuereinrichtung 25 ist es, dass durch die eingestellte Fahrgeschwindigkeit v ein maximaler Erntegutdurchsatz erreicht wird. Der maximale Durchsatz wird jedoch bekanntlich durch die Leistungsfähigkeit des Feldhäckslers 1 vorgegeben. Diese maximale Leistungsfähigkeit wird als eine Sollgröße von der Steuereinrichtung 25 berücksichtigt. Dabei ist diese Sollgröße der maximal zulässige Wert des wenigstens einen berücksichtigten Parameters des Erntegute. Zur Vorgabe des Sollwertes kann von dem Bediener des Feldhäckslers 1, an einem in der Fahrerkabine 30 angeordneten Bedienterminal 42, über beispielsweise die bestehende Datenbus-Verbindung 39, dieser Wert eingestellt werden. Da die Einsatzbedingungen und die Erntegutparameter im Erntebetrieb des Feldhäckslers 1 stark variieren, kann es zur Findung des optimalen Sollwertes vorgesehen sein die Fahrgeschwindigkeit v des Feldhäcksler 1 mittels des Fahrhebels 21 zunächst manuell zu steuern. Die Steuereinrichtung 25 erfasst oder ermittelt nun innerhalb dieses Betriebs, die für den anstehenden Erntebetrieb vorherrschenden Parameter und deren gegenseitigen Abhängigkeiten. Durch beispielsweise eine Betätigung des in der Fahrerkabine 30 angeordneten Fußtasters 43 kann dann der Sollwert in die Steuereinrichtung 25 übernommen werden. Eine manuelle Einstellung oder Korrektur des Sollwertes ist durch die Bedienelemente 44 an dem Bedienterminal 42 ferner möglich.
In der einfachsten Ausführung der Steuerung der Fahrgeschwindigkeit v wird von der Steuereinrichtung 25 der wenigstens eine Parameter des Erntgutes von der Sensorik 24 abgefragt und mit einem Sollwert verglichen. Liegt eine Differenz vor, wird diese von der Steuereinrichtung 25 als eine Regeldifferenz erkannt und von dieser eine entsprechende Änderung der Fahrgeschwindigkeit v ermittelt, worauf dann ein entsprechendes korrigierendes Stellsignal an den Fahrantrieb 19 übermittelt wird. Verringert sich nun beispielsweise der Erntegutdurchsatz durch den Feldhäcksler 1, durch beispielsweise einen schwächeren Erntegutbestand/ -ertrag, wird dieses von der Steuereinrichtung 25 durch ein entsprechendes Signal von der Sensorik 24 erkannt. Die Steuereinrichtung 25 ermittelt nun eine notwendige Änderung der Fahrgeschwindigkeit v. Diese Änderung wird dann in Form einer Erhöhung der Fahrgeschwindigkeit v so gewählt, dass sich die gewünschte Erhöhung des Erntegutdurchsatzes erreicht beziehungsweise sich der vorherige Erntegutdurchsatz erneut einstellt.

Erfindungsgemäß wird bei der Steuerung der Fahrgeschwindigkeit v des Feldhäckslers 1 nicht nur der wenigstens eine Parameter des Erntegutes sondern auch wenigstens eine Parameter des Hauptaggregate 8 und/oder des Nebenaggregates 19 berücksichtigt. Ein Parameter des Hauptaggregates 8 ist beispielsweise die Drehzahl der Häckseltrommel 8, die mittels des Trommelsensors 22 erfasste und an die Steuereinrichtung 25 und eventuell auch an die in der Fahrerkabine 30 angeordnete Drehzahlanzeige 23 gemeldet wird. Stellt sich beispielsweise bei einem konstanten Erntegutdurchsatz eine veränderte Drehzahl der Häckseltrommel 8 ein, so kann hieraus von der Steuereinrichtung 25 ein veränderter Erntegutparameter, beispielsweise eine veränderte Gutdichte erkannt werden. Die bekannte Abhängigkeit zwischen den berücksichtigten Parametern wird dann entsprechend korrigiert und damit es zu keiner Überbeziehungsweise Unterlastung des Antriebsmotors 4 kommt, von der Steuereinrichtung 25 eine angepasste Fahrgeschwindigkeit v eingestellt.
Erfindungsgemäß kann bei der Steuerung der Fahrgeschwindigkeit v wenigstens ein Parameter eines Nebenaggregates 2,5,10,19 berücksichtig werden. Dieser Parameter kann ein Parameter des Vorsatzgerätes 2, des Einzugsorgans 5, des Nachbeschleunigers 10, des Fahrantriebs 19 oder eine Parameter einer hier nicht dargestellten Nachzerkleinerungseinrichtung im Austragschacht 9 sein. Insbesondere kommen hierfür beispielsweise Drehzahlen oder Drehmomente als geeignete Parameter in Betracht, wobei es im Rahmen der Erfindung liegt, die Parameter der Nebenaggregate 2,5,10,19 jeweils getrennt oder auch in für den Fachmann naheliegender Weise kombiniert bei der Steuerung der Fahrgeschwindigkeit v zu berücksichtigen.
In Feldhäckslern 1 werden überwiegend hydrostatische Fahrantriebe 19 verwendet. Dieser besteht bekanntlich aus wenigstens einer verstellbaren Hydraulikpumpe 15 und einem Hydraulikmotor 16 und aus entsprechender Steuer- und Sicherheitstechnik. Die Hydraulikpumpe 15 wird über ein am Antriebsmotor 4 direkt angeflanschtes Nebengetriebe 14 vom Antriebsmotor 4 angetrieben. Als weiteres Element des Fahrantriebs 19 ist an der Vorderachse 17 ein Schaltgetriebe 31 angeordnet. An diesem ist der Hydraulikmotor 16 direkt angeflanscht. Die Fahrantriebsleistung wird von der Hydraulikpumpe 15 über nicht näher dargestellte Hydraulikleitungen an den Hydraulikmotor 16 übertragen. Je nach Vorgabe des Bedieners oder der automatischen Steuereinrichtung 25 des Feldhäckslers 1, wird die Fördermenge des Hydraulikmotors 15 so eingestellt, dass die gewünschte Fahrgeschwindigkeit erreicht wird.
Es liegt im Rahmen der Erfindung auch weitere bekannte Fahrantriebe an dem Feldhäcksler 1 zu verwenden. So ist es beispielsweise dem Fachmann geläufig den Fahrantrieb 19 auch mit einem verstellbaren Hydraulikmotor 16 auszustatten. Ferner sind Einzelradantriebe an den einzelnen Antriebsrädern 3 des Feldhäckslers 19 bekannt. Entscheidend für den verwendeten Fahrantrieb 19 ist die automatisch Einstellbarkeit der Fahrgeschwindigkeit v. Die hierfür notwendigen Einrichtungen an dem Feldhäcksler 1 und dem Fahrantrieb 19 sind dem Fachmann ausreichend bekannt und bedürfen keiner weiteren Erläuterung.

Der in dem hydrostatischen Fahrantrieb 19 anstehende Druck, zeigt die momentane Belastung des Fahrantriebes 19 an, wobei hieraus auch Rückschlüsse auf den momentanen Fahrwiderstandes im Gelände abgeleitet werden können. Dieser Druck wird durch einen Drucksensor 36 im hydrostatischen Fahrantrieb 19, hier am Hydraulikmotor 16 angeordnet, gemessen und an das Getriebesteuergerät 35 übergeben. An das Getriebesteuergerät 35 wird ferner durch den Sensor 34 die die Fahrgeschwindigkeit v des Feldhäckslers 1 angebende Drehzahl der Getriebeausgangswelle 33 gemeldet. Weiterhin kann aus der aktuellen Einstellungen der Hydraulikpumpe 15 und den bekannten Parametern des Hydraulikmotors 16, wie das Schluckvolumen und dem aktuellen Druck, auch die vom dem Fahrantrieb 19 verbrauchte Fahrantriebsleistung berechnet werden. Das Getriebesteuergerät 35 steht über eine Datenbus- Verbindung 40, beispielsweise über eine CAN-Bus-Verbindung, mit der Steuereinrichtung 25 in Verbindung. Die Steuereinrichtung 25 ist ferner über eine elektrische Verbindung 38 mit einer Steuervorrichtung 37 an der Hydraulikpumpe 15 verbunden und übergibt an diese wenigstens ein Signal über die Ölfördermenge beziehungsweise regelt über die Steuervorrichtung 37 die Fahrgeschwindigkeit v so, dass sich die gewünschte Fahrgeschwindigkeit v des Feldhäckslers 1 einstellt und eingehalten wird.

Die erfindungsgemäße Berücksichtigung der Fahrantriebsleistung im Fahrantrieb 19 ermöglicht eine Beurteilung über die Höhe der in dem Nebenaggregat verbrauchten Leistung des Antriebsmotors 4. Die Steuereinrichtung 25 kann die Fahrantriebsleistung ständig überwachen und aus deren Änderung in Verbindung mit der aktuellen Fahrgeschwindigkeit v eine Aussage über den momentanen Fahrwiderstand im Gelände und eine eventuelle Berg- oder Talfahrt ableiten. Beispielsweise bewirkt eine Erhöhung der Fahrantriebsleistung, verursacht durch eine Bergauffahrt, zwangsweise auch eine Erhöhung des Drehmoments am Antriebsmotor 4. Die Fahrgeschwindigkeit v wird dann erfindungsgemäß so gesteuert, dass eine Überlastung des Antriebsmotors 4 ausgeschlossen wird. Ferner ist es möglich anhand der bekannten maximalen Fahrantriebsleistung, die Fahrgeschwindigkeit v so zu steuern, dass eine Leistungsreserve zur Überwindung von kurzzeitigen Leistungsanforderungen, durch beispielsweise ein Überfahren eines Steines oder ein Durchfahren einer Bodenwelle, jederzeit bereitgestellt werden kann. Gelangt die Fahrantriebsleistung an seinen maximalen Wert, so wird erfindungsgemäß eine von dem Parameter des Erntegutes ausgehende Erhöhung der Fahrgeschwindigkeit v so lange unterdrückt, bis dass die zur Erhöhung der Fahrgeschwindigkeit v erforderliche Fahrantriebsleistung zur Verfügung steht.

Erfindungsgemäß ist ferner vorgesehen, wenigstens einen Parameter des Antriebsmotors 4 bei der Steuerung der Fahrgeschwindigkeit v des Feldhäckslers 1 zu berücksichtigen. Die Steuereinrichtung 25 steht hierfür mit einem Motorsteuergerät 45 am Antriebsmotor 4 in Verbindung und erhält von diesem, wenigstens ein Parameter des Antriebsmotors 4. Der Parameter kann beispielsweise die Kühlmitteltemperatur des Antriebsmotors 4 sein. Überschreiten dieser Parameter einen vorgegebenen Grenzwert wird eine Mehrbelastung des Antriebsmotors 4 durch eine Erhöhung der Fahrgeschwindigkeit v nur zugelassen, wenn hierbei der Antriebsmotor nicht zusätzlich belastet wird. Als ein weiterer erfindungsgemäß berücksichtigter Parameter des Antriebsmotors 4 sei dessen Drehzahl genannt. Hieran kann die Belastung des Antriebsmotors 4 abgelesen werden. Einer Überdrehung oder zu starken Motordrückung kann erfindungsgemäß durch eine entsprechende Steuerung der Fahrgeschwindigkeit v entgegen gewirkt werden.
Es ist weiterhin vorgesehen, das Drehmoment des Antriebsmotors 4 als eine Parameter des Antriebsmotors 4 erfindungsgemäß zu berücksichtigen. Hieraus kann anhand der bekannten Drehmomentkennlinie des Antriebsmotors 4, eine Drehmomentreserve sowie in Verbindung mit der Drehzahl des Antriebsmotors 4, die Antriebsleistung und eine Leistungsreserve des Antriebsmotors 4 bestimmt werden. Eine Erhöhung der Fahrgeschwindigkeit v wird nur dann von der Steuereinrichtung 25 vorgenommen, wenn das maximal zulässige Drehmoment beziehungsweise eine bestimmte Leistungsreserve des Antriebsmotors 4 nicht überschritten wird.
Aus der aktuellen verfügbaren Antriebsleistung des Antriebsmotors 4 und der im Fahrantrieb verbrauchten Fahrantriebsleistung kann die für die Bearbeitung von Erntegut verfügbare Antriebsleistung ermittelt werden. Hieraus kann unter Berücksichtigung von Parametern des Erntegutes und/oder aus der bekannten zuvor ermittelten aktuellen Abhängigkeit zwischen der Antriebsleistung der Häckseltrommel 8 und dem Erntegutdurchsatz, ein verarbeitbarer Erntegutdurchsatz bestimmt und erfindungsgemäß verwendet werden. Fährt nun der Feldhäcksler 1 beispielsweise von der Ebene in ein Tal ein, wird der Fahrantrieb 19 entlastet und die Fahrgeschwindigkeit v steigt an. Folglich wird dann mehr Erntegut von dem Vorsatzgerät 2 vom Boden 20 aufgenommen und dieses von der Sensorik 24 entsprechend erkannt. Die Steuereinrichtung 25 regelt infolgedessen die Fahrgeschwindigkeit v entsprechend zurück. Hier setzt nun das erfindungsgemäße Verfahren im Besonderen an, indem die Nachregelung der Fahrgeschwindigkeit v nur so weit erfolgt, bis die maximale Antriebsleistung von dem Antriebsmotors 4 abgegeben wird. Der verarbeitbare Erntegutdurchsatz wird erfindungsgemäß so berechnet und verwendet, dass sich die optimale Leistungsabgabe des Antriebsmotors 4 einstellt. Diese Erhöhung des verarbeitbaren Erntegutdurchsatzes bewirkt automatisch eine Erhöhung der hiervon abhängigen Fahrgeschwindigkeit v des Feldhäckslers 1 und somit auch eine Erhöhung der Antriebsleistung des Fahrantriebs 19. Im Ergebnis wird der aktuelle Erntegutdurchsatz in Verbindung mit der verfügbaren Antriebsleistung des Antriebsmotors 4 optimal an den momentanen Erntebetrieb eingestellt. Fällt nun die Entlastung im Fahrantrieb 19 weg, so wird der verarbeitbare Erntegutdurchsatz entsprechende verringert und eine angepasste Fahrgeschwindigkeit v erfindungsgemäß eingestellt.

Die Steuereinrichtung 25 beobachtet ferner die bei der Steuerung der Fahrgeschwindigkeit berücksichtigten Parameter und ermittelt deren Abhängigkeiten. Die erkannten Abhängigkeiten können beispielsweise in Form eines Wertes, einer Tabelle, einer Kennlinie oder eines mathematischen Algorithmusses erfasst und in der Steuereinrichtung 25 hinterlegt werden. Anhand der Abhängigkeiten ist es möglich Veränderungen in den Erntebedingungen beziehungsweise den Abhängigkeiten zu erkennen und bei der Steuerung der Fahrgeschwindigkeit v entsprechend berücksichtigen zu können. Es ist beispielsweise so vorgesehen, das wenigstens eine Abhängigkeit zwischen wenigstens dem Antriebsmotor 4 und wenigstens einem Parameter des Nebenaggregates ermittelt wird. Beispielsweise wird als eine entsprechende Abhängigkeit, der Druck im hydrostatischen Fahrantrieb 19 und die Antriebsleistung des Antriebsmotors 4 ermittelt und berücksichtigt. Von der Steuereinrichtung 25 wird eine Erhöhung des Druckes im Fahrantrieb 19, als eine Antriebsleistungserhöhung im Fahrantrieb 19 erkannt. Erfindungsgemäß wird aus der bekannten Abhängigkeit die benötige Mehrleistung von der Antriebsleistung des Antriebsmotors 4 für den Fahrantrieb 19 berechnet und der Erntegutdurchsatz entsprechend durch eine geringere Fahrgeschwindigkeit v korrigiert. Die Reduzierung der Fahrgeschwindigkeit v bewirkt ebenfalls eine Reduzierung in den Nebenaggregaten 5,10,19. Die freiwerdende Antriebsleistung steht dann dem Fahrantrieb 19 beispielsweise zur Überwindung des größeren Fahrwiderstandes zur Verfügung. Von der Steuereinrichtung 25 wird die nunmehr erneut die veränderte Abhängigkeit zwischen dem Druck im hydrostatischen Fahrantrieb 19 und der Antriebsleistung des Antriebsmotors 4 ermittelt und diese nunmehr neue Abhängigkeit bei der Steuerung der Fahrgeschwindigkeit v berücksichtigt.
Als eine weitere Abhängigkeit kann die Abhängigkeit zwischen wenigstens einem Parameter des Antriebsmotors 4 und wenigstens einem Parameter des Hauptaggregates 8 erfindungsgemäß berücksichtigt werden. Aus dieser Abhängigkeit kann beispielsweise anhand einer Drehzahländerung der Häckseltrommel 8 eine Änderung der Antriebsleistung des Antriebsmotors 4 und umgekehrt die frei werdende Antriebsleistung bei der Reduzierung der Fahrgeschwindigkeit im Voraus berechnet werden.
Die erfindungsgemäße Ermittlung und Berücksichtigung dieser Abhängigkeit ist insbesondere auch dann vorteilhaft, wenn sich das Übersetzungsverhältnisses zwischen dem Antriebsmotor 4 und dem Hauptaggregat 8 im Erntebetriebe verändern kann. Dies ist beispielsweise an Mähdreschern 46 der Fall. Hieraus kann dann der aktuelle Einfluss des Hauptaggregates 55 auf die Drehzahl beziehungsweise Antriebsleistung des Antriebsmotors 4 ermittelt und insbesondere auch der Erntegutdurchsatz in Abhängigkeit von der Drehzahl des Antriebsmotors 4 abgeleitet werden. Damit die Steuerung der Fahrgeschwindigkeit nicht instabil wird, kann anhand der bekannten ermittelten Abhängigkeiten die gegenseitig Beeinflussung vorausberechnet und eine entsprechende Steuerung der Fahrgeschwindigkeit v erfindungsgemäß durchgeführt werden. Die Entscheidung ob eine Fahrgeschwindigkeitserhöhung zulässig oder zu einer Überlastung des Antriebsmotors führen würde, ist ferner hierdurch möglich.

Als eine weitere Abhängigkeit wird die Abhängigkeit des wenigstens einen Parameters des Erntegutes und der Fahrgeschwindigkeit v des Feldhäckslers 1 ermittelt und erfindungsgemäß berücksichtigt. Die gegenseitige Beeinflussung von Erntegutdurchsatz und Fahrgeschwindigkeit v kann hierdurch beziffert und eine entsprechende Steuerung der Fahrgeschwindigkeit v durchgeführt werden. Ändert sich der Erntegutdurchsatz bei gleicher Fahrgeschwindigkeit, ändert sich auch die Abhängigkeit der beiden erfindungsgemäß berücksichtigten Parameter. Die erforderliche Stellgröße zur Veränderung der Fahrgeschwindigkeit v kann dann, entsprechend der neuen Abhängigkeit, an den veränderten Erntegutdurchsatz angepasst werden.

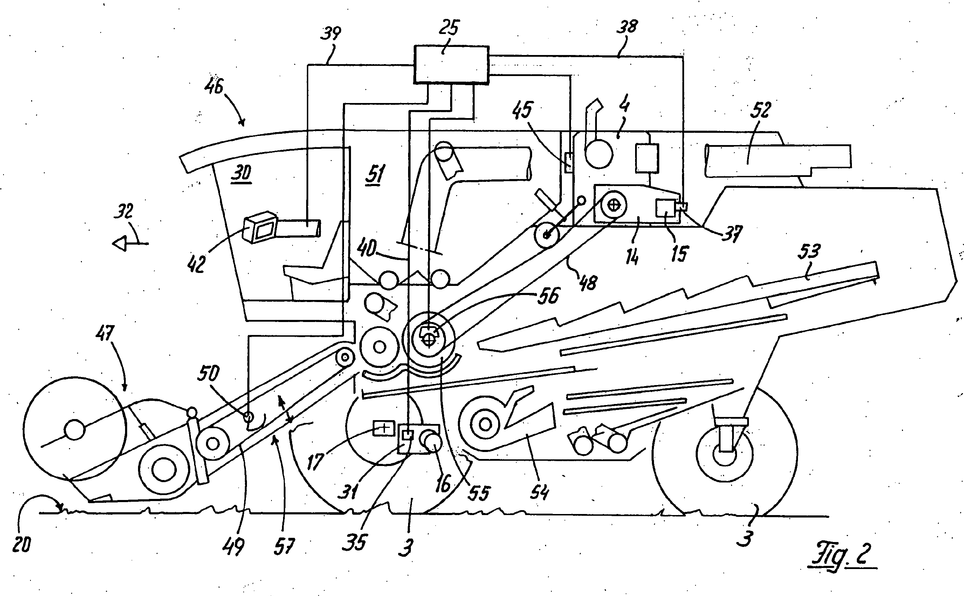

In der Figur 2 wird ein Mähdrescher 46 in der Seitenansicht gezeigt. Der Mähdrescher 46 besitzt im Hinblick auf das erfindungsgemäße Verfahren gleiche Einrichtungen wie der in der Figur 1 gezeigte Feldhäcksler 1. Dieser werden zur besseren Verständlichkeit des erfindungsgemäßen Verfahrens an dem Mähdrescher 46 mit gleichen Bezugszeichen beziffert.
Die von dem Getreideschneidwerk 47 des Mähdreschers 46 aufgenommene Erntegutmenge wird durch den Einzugsschacht 57 mittels der darin umlaufenden Einzugskette 49 an die nachfolgend angeordnete Dreschtrommel 55 übergeben. Im Rahmen der Erfindung stellt diese Dreschtrommel 55 das Hauptaggregat der Erntemaschine dar. Die Dreschtrommel 55 wird über den Hauptriemen 48 von dem Antriebsmotor 4 angetrieben, wobei die Drehzahl der Dreschtrommel 55 gegenüber der Motordrehzahl variabel eingestellt werden kann. Das aktuelle Übersetzungsverhältnis wird anhand der von dem Dreschtrommelsensor 56 erfassten Drehzahl der Dreschtrommel 55 und Drehzahl des Antriebsmotors 4 von der Steuereinrichtung 25 berechnet und als eine Abhängigkeit erfindungsgemäß berücksichtigt. Die Steuerung der Fahrgeschwindigkeit v des Mähdreschers 46, wird von der von dem Schachtsensor 50 erfassten Auslenkung der Einzugskette 49 abhängig durchgeführt. Eine Erhöhung der im Einzugkanal 57 befindlichen Erntegutmenge bewirkt, durch die automatische Steuerung der Fahrgeschwindigkeit v eine Verringerung der Fahrgeschwindigkeit v des Mähdreschers 46. Eine Verringerung der Auslenkung der Einzugskette 49, bewirkt eine entsprechende Erhöhung der Fahrgeschwindigkeit v des Mähdreschers 46. Zwischen der Antriebsmotordrehzahl und der Fördergeschwindigkeit der Einzugskette 49 besteht eine feste Beziehung, so dass anhand der Drehzahl des Antriebsmotors 4 in Verbindung mit der Auslenkung der Einzugskette 49 der Erntegutdurchsatz bestimmt werden kann. Der Erntegutdurchsatz durch den Mähdrescher 46 wird erfindungsgemäß automatisch an den momentanen Erntegutertrag auf dem Feldstück angepasst. Die Anpassung der Fahrgeschwindigkeit v an die verarbeitete Erntegutmenge kann anhand einer bekannten Abhängigkeit gesteuert beziehungsweise auch von einer Regeleinrichtung optimal geregelt werden. Insbesondere bei einen Mähdrescher 46 ist es für den optimalen Arbeitsbetrieb erforderlich, dass eine konstante Arbeitsdrehzahl der Aggregate 53,54,55 eingehalten wird. Daher ist auch eine konstante Drehzahl des Antriebsmotors 4 bei gleichzeitiger optimalen Ausnutzung der verfügbaren Antriebsleistung des Antriebsmotors 4 anzustreben. Die Drehzahl des Antriebsmotors 4 wird daher im Erntebetrieb konstant eingestellt, eine Fahrgeschwindigkeitsänderung wird mittels der Einstellung des Fahrantriebs 19 durchgeführt. Starke Schwankungen der Antriebsdrehzahl durch eine schwankende Antriebsmotordrehzahl führen zu unerwünschten unterschiedlichen Arbeitsergebnissen des Mähdreschers 46 und können durch unterschiedliche Belastungen von den Nebenaggregaten 19,47,52,54,55,57 verursacht werden.
Insbesondere wird der Antriebsmotor 4, im Wesentlichen unabhängig von dem berücksichtigten Erntegutparameter, von dem Fahrantrieb 19 und dem Reinigungsgebläse 54 belastet. Weiterhin stellt insbesondere am Mähdrescher 46 die Entleerung des Korntank 51, mittels der Korntankentleerung 52, ein weiterer Nebenaggregat am Mähdrescher 46 dar, der nur während der kurzzeitigen Entleerung dem Antriebsmotor 4 eine zusätzlich aufzubringende Antriebsleistung abverlangt. Wird beispielsweise die Korntankentleerung 52 eingeschaltet, wird die für die Erntegutbearbeitung verfügbare Antriebsleistung des Antriebsmotors 4 erfindungsgemäß automatisch reduziert. Die Höhe dieser zusätzlichen Belastung des Antriebsmotors 4 ist bekannt, so dass bei der Steuerung der Fahrgeschwindigkeit v des Mähdreschers 46, eine eingeschaltete Korntankentleerung 52 erfindungsgemäß zu einer Korrektur der berechneten verarbeitbaren Erntegutdurchsatzes führt und eine entsprechende Korrektur der Fahrgeschwindigkeit v erfolgt.
Als ein weiteres Nebenaggregat sein hier noch ein in der Figur 2 nicht dargestellter Strohhäcksler am Mähdrescher 46 genannt. Dieser wird je nach bedarf im Erntebetrieb zu- oder abgeschaltet. Die Berücksichtigung wenigstens eines Parameters des Strohhäckslers am Mähdrescher 46, bei der Steuerung der Fahrgeschwindigkeit v des Mähdreschers 46, liegt im Rahmen der Erfindung. Ferner kann ein Parameter des Einzugsschachts 57 oder des Vorsatzgerätes 47, beispielsweise deren Antriebsleistung, bei der Steuerung der Fahrgeschwindigkeit v erfindungsgemäß berücksichtigt werden.

Es ist für einen Fachmann ohne erfinderisch tätig zu werden als naheliegend anzusehen, dass er die obengenannten Ausführungsbeispiel, durch die Berücksichtigung weiterer Parameter der Erntemaschine 1,46 weiter ausgestaltet, sowie das erfindungsgemäße Verfahren auf weitere ihm bekannte Erntemaschinen überträgt.

### Bezugszeichenliste:

- 1: Feldhäcksler
- 2: Vorsatzgerät
- 3: Räder
- 4: Antriebsmotor
- 5: Einzugsorgan
- 6: Einzugswalzen unten
- 7: Einzugswalzen oben
- 8: Messertrommel
- 9: Austragschacht
- 10: Nachbeschleuniger
- 11: Auswurfkrümmer
- 12: Auswurfklappe
- 13: Antriebsriemen
- 14: Nebengetriebe
- 15: Hydraulikpumpe
- 16: Hydraulikmotor
- 17: Vorderachse
- 18: Schaltgetriebe
- 19: Fahrantrieb
- 20: Boden
- 21: Fahrhebel
- 22: Trommelsensor
- 23: Drehzahlanzeige
- 24: Sensorik
- 25: Steuereinrichtung
- 30: Fahrerkabine
- 31: Schaltgetriebe
- 32: Fahrtrichtung
- 33: Getriebeausgangswelle
- 34: Sensor
- 35: Getriebesteuergerät
- 36: Drucksensor
- 37: Steuervorrichtung
- 38: elektrische Verbindung
- 39: Datenbus- Verbindung
- 40: Datenbus- Verbindung
- 41: Sensor
- 42: Bedienterminal
- 43: Fußtaster
- 44: Bedienelemente
- 45: Motorsteuergerät
- 46: Mähdrescher
- 47: Getreideschneidwerk
- 48: Hauptriemen
- 49: Einzugskette
- 50: Schachtsensor
- 51: Korntank
- 52: Korntankentleerung
- 53: Schüttler
- 54: Reinigungsgebläse
- 55: Dreschtrommel
- 56: Dreschtrommelsensor
- 57: Einzugsschacht

## Patentansprüche

1. Verfahren zur Steuerung der Fahrgeschwindigkeit einer selbstfahrenden landwirtschaftlichen Erntemaschine, mit wenigstens einem Hauptaggregat und wenigstens einem Nebenaggregat, wobei die Fahrgeschwindigkeit in Abhängigkeit von wenigstens einem Parameter des Erntegutes gesteuert wird,
**dadurch gekennzeichnet,**
**dass** die Steuerung der Fahrgeschwindigkeit (v) wenigstens einen **weiteren** Parameter des Hauptaggregates (8,55) und/oder des Nebenaggregates (2,5,10,19,47,52,53,54) der Erntemaschine (1,46) berücksichtigt, **in der Weise, dass es zu keiner Überlastung des Antriebsmotors (4) kommt.**

2. Verfahren nach Anspruch 1,
**dadurch gekennzeichnet, dass**
der wenigstens eine Parameter des Hauptaggregates (8,55) und/oder des Nebenaggregates (2,5,10,19,47,52,53,54) im wesentlichen unabhängig von wenigstens einem Parameter des Erntegutes ist.

3. Verfahren nach wenigstens einem der vorherigen Ansprüche 1 oder 2,
**dadurch gekennzeichnet, dass**
das wenigstens eine Nebenaggregat (2,5,10,19,47,52,53,54), der Fahrantrieb (19) der Erntemaschine (1,46) und das der wenigstens eine Parameter, zumindest ein Parameter des Fahrantriebs (19) ist.

4. Verfahren nach wenigstens einem der vorherigen Ansprüche 1 bis 3,
**dadurch gekennzeichnet, dass**
der wenigstens eine Parameter des Fahrantriebs (19) der Erntemaschine (1,46), die Fahrantriebsleistung ist.

5. Verfahren nach wenigstens einem der vorherigen Ansprüche 1 bis 4,
**dadurch gekennzeichnet, dass**
eine Änderung der Fahrgeschwindigkeit (v) der Erntemaschine (1,46) unter Berücksichtigung der Leistungsreserve des Fahrantriebs (19) erfolgt.

6. Verfahren nach wenigstens einem der vorherigen Ansprüche 1 bis 5,
**dadurch gekennzeichnet, dass**
der Fahrantrieb (19) der Erntemaschine (1,46) ein hydrostatischer Fahrantrieb (19) und der wenigstens eine Parameter des Fahrantriebs (19), der Druck im hydrostatischen Fahrantrieb (19) ist.

7. Verfahren nach wenigstens einem der vorherigen Ansprüche 1 bis 6,
**dadurch gekennzeichnet, dass**
das wenigstens eine Hauptaggregat (8,55) und/oder das wenigstens eine Nebenaggregat (2,5,10,19,47,52,53,54) von einem in der Erntemaschine (1,46) vorhandenen Antriebsmotor (4) angetrieben und bei der Steuerung der Fahrgeschwindigkeit (v) wenigstens ein Parameter des Antriebsmotors (4) berücksichtig wird.

8. Verfahren nach wenigstens einem der vorherigen Ansprüche 1 bis 7,
**dadurch gekennzeichnet, dass**
der eine Parameter des Antriebsmotors (4), das abgegebene Drehmoment ist.

9. Verfahren nach wenigstens einem der vorherigen Ansprüche 1 bis 8,
**dadurch gekennzeichnet, dass**
eine Änderung der Fahrgeschwindigkeit (v) der Erntemaschine (1,46) unter Berücksichtigung der Drehmomentreserve des Antriebsmotors (4) erfolgt.

10. Verfahren nach wenigstens einem der vorherigen Ansprüche 1 bis 9,
**dadurch gekennzeichnet, dass**
der verarbeitbare Erntegutdurchsatz aus der maximal verfügbaren Antriebsleistung des Antriebsmotors (4), unter Berücksichtigung wenigstens einer Antriebsleistung eines Nebenaggregates (2,5,10,19,47,52,53,54) bestimmt und der verarbeitbare Erntegutdurchsatz bei der Steuerung der Fahrgeschwindigkeit (v) der Erntemaschine (1,46) berücksichtigt wird.

11. Verfahren nach wenigstens einem der vorherigen Ansprüche 1 bis 10,
**dadurch gekennzeichnet, dass**
wenigstens eine Abhängigkeit zwischen wenigstens einem Parameter des Antriebsmotors (4) und wenigstens einem Parameter des Nebenaggregates (2,5,10,19,47,52,53,54) ermittelt und bei der Steuerung der Fahrgeschwindigkeit (v) der Erntemaschine (1,46) berücksichtigt wird.

12. Verfahren nach wenigstens einem der vorherigen Ansprüche 1 bis 11,
**dadurch gekennzeichnet, dass**
wenigstens eine Abhängigkeit zwischen wenigstens einem Parameter des Antriebsmotors (4) und wenigstens einem Parameter des Hauptaggregates (8,55) ermittelt und bei der Steuerung der Fahrgeschwindigkeit (v) der Erntemaschine (1,46) berücksichtigt wird.

13. Verfahren nach wenigstens einem der vorherigen Ansprüche 1 bis 12,
**dadurch gekennzeichnet, dass**
wenigstens eine Abhängigkeit zwischen wenigstens einem Parameter des Erntegutes und der Fahrgeschwindigkeit (v) der Erntemaschine (1,46) ermittelt und bei der Steuerung der Fahrgeschwindigkeit (v) der Erntemaschine (1,46) berücksichtigt wird

## Claims

1. A method of controlling the travel speed of a self-propelled agricultural harvester comprising at least one main assembly and at least one secondary assembly, wherein the travel speed is controlled in dependence on at least one parameter of the crop material,
**characterised in that** the control of the travel speed (v) takes account of at least one further parameter of the main assembly (8, 55) and/or the secondary assembly (2, 5, 10, 19, 47, 52, 53, 54) of the harvester (1, 46) in such a way that no overloading of the drive engine (4) occurs.

2. A method according to claim 1 **characterised in that** the at least one parameter of the main assembly (8, 55) and/or the secondary assembly (2, 5, 10, 19, 47, 52, 53, 54) is substantially independent of at least one parameter of the crop material.

3. A method according to at least one of preceding claims 1 and 2 **characterised in that** the at least one secondary assembly (2, 5, 10, 19, 47, 52, 53, 54) is the travel drive (19) of the harvester (1, 46) and the at least one parameter is at least one parameter of the travel drive (19).

4. A method according to at least one of preceding claims 1 to 3 **characterised in that** the at least one parameter of the travel drive (19) of the harvester (1, 46) is the travel drive power.

5. A method according to at least one of preceding claims 1 to 4 **characterised in that** a change in the travel speed (v) of the harvester (1, 46) is effected having regard to the power reserve of the travel drive (19).

6. A method according to at least one of preceding claims 1 to 5 **characterised in that** the travel drive (19) of the harvester (1, 46) is a hydrostatic travel drive (19) and the at least one parameter of the travel drive (19) is the pressure in the hydrostatic travel drive (19).

7. A method according to at least one of preceding claims 1 to 6 **characterised in that** the at least one main assembly (8, 55) and/or the at least one secondary assembly (2, 5, 10, 19, 47, 52, 53, 54) are driven by a drive engine (4) in the harvester (1, 46) and at least one parameter of the drive engine (4) is taken into consideration in the control of the travel speed (v).

8. A method according to at least one of preceding claims 1 to 7 **characterised in that** the one parameter of the drive engine (4) is the delivered torque.

9. A method according to at least one of preceding claims 1 to 8 **characterised in that** a change in the travel speed (v) of the harvester (1, 46) is effected having regard to the torque reserve of the drive engine (4).

10. A method according to at least one of preceding claims 1 to 9 **characterised in that** the processable crop material through-put is determined from the maximum available drive power of the drive engine (4) having regard to at least one drive power of a secondary assembly (2, 5, 10, 19, 47, 52, 53, 54) and the processable crop material through-put is taken into consideration in the control of the travel speed (v) of the harvester (1, 46).

11. A method according to at least one of preceding claims 1 to 10 **characterised in that** at least one dependency is ascertained between at least one parameter of the drive engine (4) and at least one parameter of the secondary assembly (2, 5, 10, 19, 47, 52, 53, 54) and is taken into consideration in the control of the travel speed (v) of the harvester (1, 46).

12. A method according to at least one of preceding claims 1 to 11 **characterised in that** at least one dependency is ascertained between at least one parameter of the drive engine (4) and at least one parameter of the main assembly (8, 55) and is taken into consideration in the control of the travel speed (v) of the harvester (1, 46).

13. A method according to at least one of preceding claims 1 to 12 **characterised in that** at least one dependency is ascertained between at least one parameter of the crop material and the travel speed (v) of the harvester (1, 46) and is taken into consideration in the control of the travel speed (v) of the harvester (1, 46).

## Revendications

1. Procédé de contrôle de la vitesse de déplacement d'une machine de récolte agricole automotrice, comprenant au moins un groupe principal et au moins un groupe secondaire; la vitesse de déplacement étant contrôlée en fonction d'au moins un paramètre du produit récolté, **caractérisé en ce que** le contrôle de la vitesse de déplacement (v) prend en compte au moins un paramètre **supplémentaire** du groupe principal (8, 55) et/ou du groupe secondaire (2, 5, 10, 19, 47, 52, 53, 54) de la machine de récolte (1, 46), **de manière à éviter toute surcharge du moteur d'entraînement (4).**

2. Procédé selon la revendication 1, **caractérisé en ce que** le paramètre, au nombre d'au moins un, du groupe principal (8, 55) et/ou du groupe secondaire (2, 5, 10, 19, 47, 52, 53, 54) est sensiblement indépendant d'au moins un paramètre du produit récolté.

3. Procédé selon au moins une des revendications précédentes 1 ou 2, **caractérisé en ce que** le groupe secondaire (2, 5, 10, 19, 47, 52, 53, 54), au nombre d'au moins un, est le système de propulsion (19) de la machine de récolte (1, 46) et **en ce que** le paramètre, au nombre d'au moins un, est au moins un paramètre du système de propulsion (19).

4. Procédé selon au moins une des revendications précédentes 1 à 3, **caractérisé en ce que** le paramètre, au nombre d'au moins un, du système de propulsion (19) de la machine de récolte (1, 46) est la puissance de propulsion.

5. Procédé selon au moins une des revendications précédentes 1 à 4, **caractérisé en ce qu'**une modification de la vitesse de déplacement (v) de la machine de récolte (1, 46) est effectuée en tenant compte de la réserve de puissance du système de propulsion (19).

6. Procédé selon au moins une des revendications précédentes 1 à 5, **caractérisé en ce que** le système de propulsion (19) de la machine de récolte (1, 46) est un système de propulsion hydrostatique (19) et le paramètre, au nombre d'au moins un, du système de propulsion (19) est la pression dans le système de propulsion (19) hydrostatique.

7. Procédé selon au moins une des revendications précédentes 1 à 6, **caractérisé en ce que** le groupe principal (8, 55), au nombre d'au moins un, et/ou le groupe secondaire (2, 5, 10, 19, 47, 52, 53, 54), au nombre d'au moins un, est/sont entraîné(s) par un moteur d'entraînement (4) prévu dans la machine de récolte (1, 46) et le contrôle de la vitesse de déplacement (v) prend en compte au moins un paramètre du moteur d'entraînement (4).

8. Procédé selon au moins une des revendications précédentes 1 à 7, **caractérisé en ce que** le paramètre du moteur d'entraînement (4) est le couple débité.

9. Procédé selon au moins une des revendications précédentes 1 à 8, **caractérisé en ce qu'**une modification de la vitesse de déplacement (v) de la machine de récolte (1, 46) est effectuée en tenant compte de la réserve de couple du moteur d'entraînement (4).

10. Procédé selon au moins une des revendications précédentes 1 à 9, **caractérisé en ce que** le débit de produit récolté pouvant être traité est déterminé à partir de la puissance d'entraînement maximale disponible du moteur d'entraînement (4), en tenant compte au moins d'une puissance d'entraînement d'un groupe secondaire (2, 5, 10, 19, 47, 52, 53, 54), et le débit de produit récolté pouvant être traité est pris en compte lors du contrôle de la vitesse de déplacement (v) de la machine de récolte (1, 46).

11. Procédé selon au moins une des revendications précédentes 1 à 10, **caractérisé en ce que** l'on détermine au moins une dépendance entre au moins un paramètre du moteur d'entraînement (4) et au moins un paramètre du groupe secondaire (2, 5, 10, 19, 47, 52, 53, 54) et on la prend en compte lors du contrôle de la vitesse de déplacement (v) de la machine de récolte (1, 46).

12. Procédé selon au moins une des revendications précédentes 1 à 11, **caractérisé en ce que** l'on détermine au moins une dépendance entre au moins un paramètre du moteur d'entraînement (4) et au moins un paramètre du groupe principal.(8, 55) et on la prend en compte lors du contrôle de la vitesse de déplacement (v) de la machine de récolte (1, 46).

13. Procédé selon au moins une des revendications précédentes 1 à 12, **caractérisé en ce que** l'on détermine au moins une dépendance entre au moins un paramètre du produit à récolter et la vitesse de déplacement de la machine de récolte (1, 46) et on la prend en compte lors du contrôle de la vitesse de déplacement (v) de la machine de récolte (1, 46).
